(19) Europäisches Patentamt
European Patent Office
Office européen des brevets

(11) EP 3 288 019 A1

(12) EUROPEAN PATENT APPLICATION
published in accordance with Art. 153(4) EPC

(43) Date of publication:
28.02.2018 Bulletin 2018/09

(51) Int Cl.:
G09G 3/36 (2006.01)          G02F 1/133 (2006.01)
G09G 3/20 (2006.01)

(21) Application number: 16783090.0

(22) Date of filing: 14.04.2016

(86) International application number:
PCT/JP2016/062023

(87) International publication number:
WO 2016/171069 (27.10.2016 Gazette 2016/43)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 24.04.2015 JP 2015089827

(71) Applicant: Sharp Kabushiki Kaisha
Sakai City, Osaka 590-8522 (JP)

(72) Inventors:
• MORI, Tomohiko
Sakai City, Osaka 590-8522 (JP)
• TOMIZAWA, Kazunari
Sakai City, Osaka 590-8522 (JP)

(74) Representative: Müller Hoffmann & Partner
Patentanwälte mbB
St.-Martin-Strasse 58
81541 München (DE)

(54) **DISPLAY CONTROL DEVICE, LIQUID CRYSTAL DISPLAY DEVICE, DISPLAY CONTROL PROGRAM, AND RECORDING MEDIUM**

(57) A display control device of the present invention include a correction circuit (11) that obtains integrated values by integrating, for a period of 0.5 frame or longer, each of the values of voltages corresponding to input levels of gray that are applied to two display pixels on the same gate lines, obtains voltage values by adding the difference between the integrated values to each of the values of the voltages corresponding to the input levels of gray, and uses the voltage values as output levels of gray of the current frame that are given to the two display pixels. This prevents the appearance of transcriptions in displaying 1-dot horizontal stripes during double-source driving.

FIG. 1

**Description**

Technical Field

The present invention relates to a display control device that control display of a double-source-drive liquid crystal display apparatus, a liquid crystal display apparatus, a display control program, and a storage medium.

Background Art

In recent years, display apparatuses such as liquid crystal display apparatuses have become increasingly larger in size and higher in definition of display panels. Such a display apparatus requires high-speed driving by which image data is written to pixels in a short period of time. A known example of a display apparatus that is effective in this high-speed driving is a so-called double-source-drive liquid crystal display apparatus disclosed in PTL 1.

Citation List

Patent Literature

PTL 1: International Publication No. WO 2010/108314 (internationally published on August 16, 2012)

Summary of Invention

Technical Problem

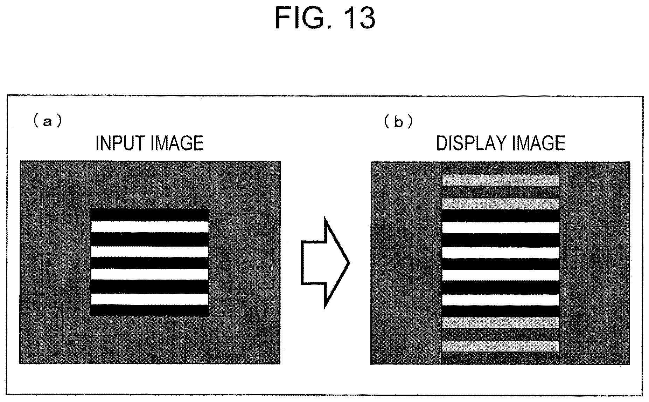

Incidentally, when displaying 1-dot horizontal stripes as an input image as shown in (a) of Fig. 13, the double-source-drive liquid crystal display apparatus suffers from the appearance of vertical shadows (transcriptions) above and below a display image of the 1-dot horizontal stripes as shown in (b) of Fig. 13.

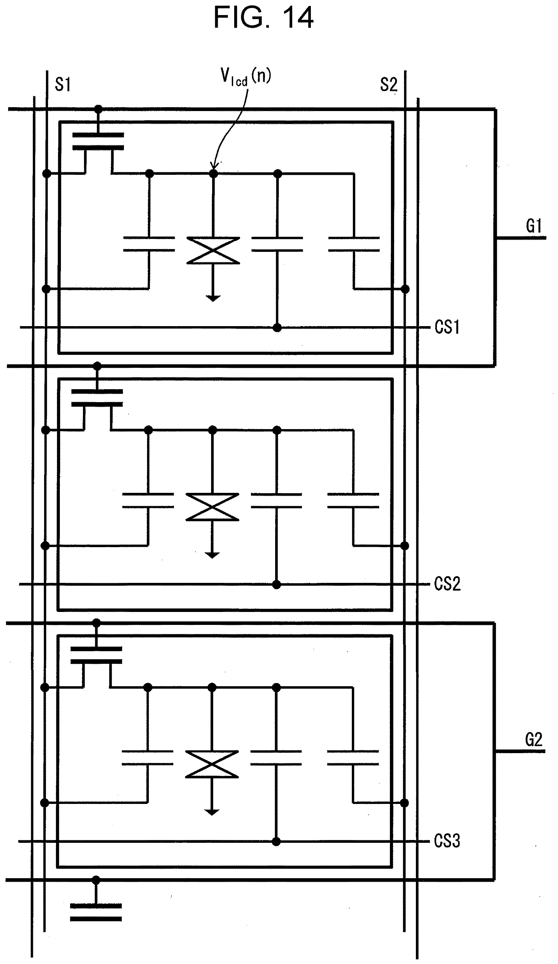

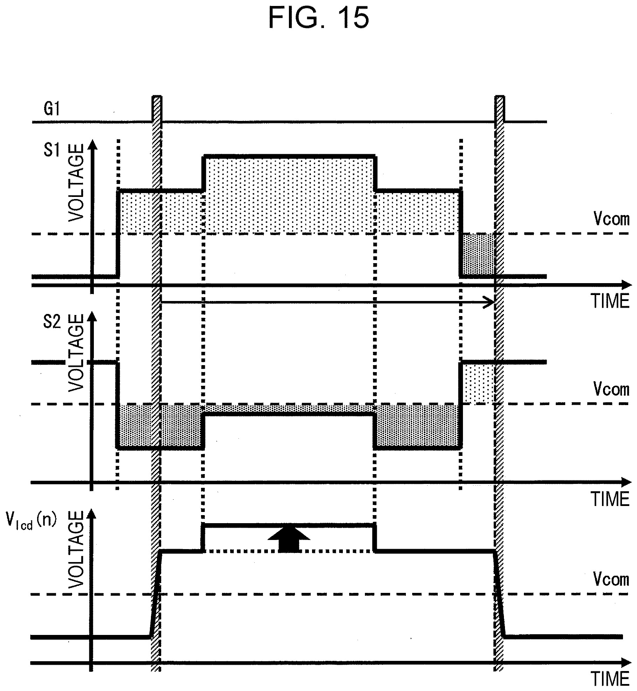

A reason for this is attributed mainly to a pixel structure of double-source driving. That is, as shown in Fig. 14, the pixel structure of double-source driving is a structure in which source voltages from two source lines S1 and S2 are applied to one pixel. This causes a parasitic capacitance to be formed between the source lines on both sides, and this parasitic capacitance (voltage) undesirably influences a voltage (VLCD(n)) that is applied to the pixel. That is, as shown in Fig. 15, there occur biases in polarity of the source voltages S1 and S2 at both ends of the pixel, and the fluctuations in voltage cause the voltage (VLCD(n)) that is applied to the pixel to fluctuate through the parasitic capacitances between the source wires and the pixel, with the result that the occurrence of a deviation from the desired level of gray is displayed as horizontal lines that appear in the form of such transcriptions as those mentioned above.

The present invention has been made in view of the foregoing problem, and it is an object of the present invention to provide a display control device that prevents the appearance of transcriptions during double-source driving of a liquid crystal display apparatus or the like. Solution to Problem

In order to solve the foregoing problem, a display control device according to an aspect of the present invention is a display control device for controlling display of a liquid crystal display apparatus of a structure in which display pixels are arranged at intersections between a plurality of gate lines and a plurality of source lines and source lines are disposed on both sides of a display pixel, the display control device including a correction circuit that obtains two integrated values by integrating, for a period of 0.5 frame or longer, values of voltages corresponding to input levels of gray that are applied to the source lines disposed on both sides of the display pixel, respectively, obtains voltage values by adding a difference between the two integrated values to the values of the voltages corresponding to the input levels of gray, and uses the voltage values as output levels of gray of a current frame that are given to the display pixel.

Advantageous Effects of Invention

An aspect of the present invention brings about an effect of making it possible to improve display quality by reducing the appearance of transcriptions (vertical shadows). Brief Description of Drawings
[Fig. 1] Fig. 1 is a block diagram of an image signal processing circuit according to Embodiment 1 of the present invention.
[Fig. 2] Fig. 2 is a diagram showing an example of a look-up table for use in gray-level-to-voltage conversion.
[Fig. 3] Fig. 3 is a block diagram showing a configuration of a liquid crystal display apparatus according to Embodiment 1 of the present invention.

[Fig. 4] Fig. 4 illustrates diagrams showing an example of a killer pattern that is displayed on the liquid crystal display apparatus shown in Fig. 3.

[Fig. 5] Fig. 5 illustrates diagrams showing an actual display example of a case where the killer pattern shown in Fig. 4 is displayed.

[Fig. 6] Fig. 6 illustrates diagrams for explaining a cause of the appearance of transcriptions in the display example shown in Fig. 5.

[Fig. 7] Fig. 7 illustrates diagrams for explaining a cause of the appearance of transcriptions in the display example shown in Fig. 5.

[Fig. 8] Fig. 8 illustrates diagrams for explaining corrections made to transcriptions through the use of the image signal processing circuit shown in Fig. 1.

[Fig. 9] Fig. 9 is a block diagram of an image signal processing circuit according to Embodiment 2 of the present invention.

[Fig. 10] Fig. 10 is a diagram for explaining corrections made to transcriptions through the use of the image signal processing circuit shown in Fig. 9.

[Fig. 11] Fig. 11 illustrates diagrams showing another example of a killer pattern.

[Fig. 12] Fig. 12 is a diagram for explaining corrections made to transcriptions in a case where the killer pattern shown in Fig. 11 is displayed.

[Fig. 13] Fig. 13 illustrates a diagram (a) showing a killer pattern to be displayed and a diagram (b) showing transcriptions that occur in a case where the killer pattern shown in (a) is actually displayed.

[Fig. 14] Fig. 14 is a circuit diagram showing a pixel structure of double-source driving.

[Fig. 15] Fig. 15 is a waveform chart explaining a principle of the occurrence of transcriptions in the circuit shown in Fig. 14.

Description of Embodiments

[Embodiment 1]

An embodiment of the present invention is described below.

The present embodiment describes an example in which a display control device of the present invention is applied to display control of a liquid crystal display apparatus.

(Overview of Liquid Crystal Display Apparatus)

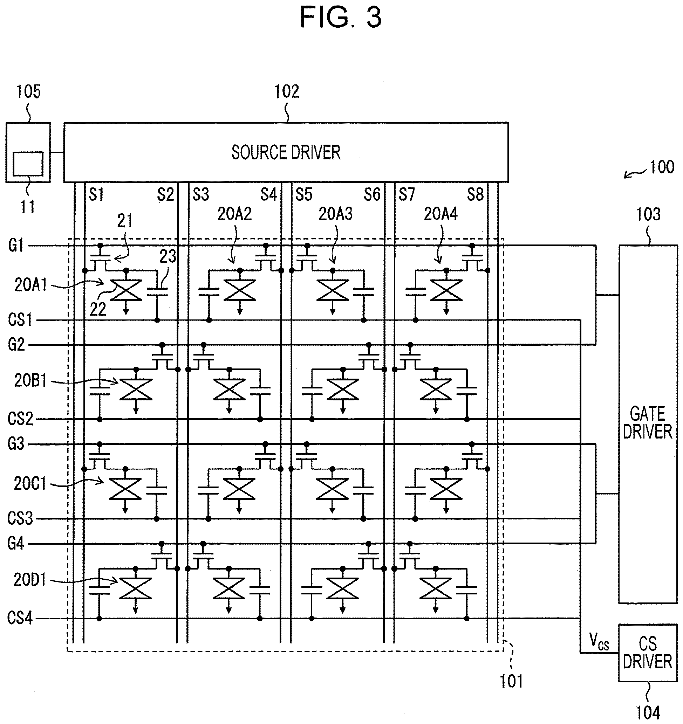

Fig. 3 is a block diagram schematically showing a configuration of a liquid crystal display apparatus 100. As shown in Fig. 3, the liquid crystal display apparatus 100 includes a display section 101, a source driver 102, a gate driver 103, and a CS driver 104. The display section 101 has an arrangement of pixels (display pixels) 20 (A1 to A4, B1 to B4, C1 to C4, and D1 to D4) at intersections between a plurality of gate lines G1, G2, G3, and G4 and a plurality of source lines S1, S2, S4, S5, S6, S7, and S8. Each of the pixels 20 (A1 to A4, B1 to B4, C1 to C4, and D1 to D4) includes a switching element 21, a pixel electrode 22, and a pixel capacitor 23. The source driver 102 supplies source signals to the source lines S1, S2, S4, S5, S6, S7, and S8. The gate driver 103 supplies gate signals to the gate lines G1, G2, G3, and G4. The CS driver 104 supplies a CS voltage (Vsc) to storage capacitor wires CS connected to the pixel capacitors 23.

It should be noted that the liquid crystal display apparatus 100 further includes a backlight, an optical film, and the like (not illustrated).

Further, the liquid crystal display apparatus 100 includes a display control device 105 that performs display control of the liquid crystal display apparatus 100. Details of this display control device 105 will be described later.

Note here that, in the liquid crystal display apparatus 100, the direction of extension of the scanning signal lines is referred to as "row-wise direction" or "transverse direction" and the direction of extension of the data signal lines is referred to as "column-wise direction" or "longitudinal direction". Accordingly, the display section 101 shown in Fig. 3 has its pixels 20A1, 20A2, 20A3, and 20A4 arranged in the first row, its pixels 20B1, 20B2, 20B3, and 20B4 arranged in the second row, its pixels 20C1, 20C2, 20C3, and 20C4 arranged in the third row, and its pixels 20D1, 20D2, 20D3, and 20D4 arranged in the fourth row. Accordingly, the display section 101 shown in Fig. 3 has its pixels 20A1, 20B1, 20C1, and 20D1 arranged in the first column, its pixels 20A2, 20B2, 20C2, and 20D2 arranged in the second column, its pixels 20A3, 20B3, 20C3, and 20D3 arranged in the third column, and its pixels 20A4, 20B4, 20C4, and 20D4 arranged in the fourth column.

Further, the liquid crystal display apparatus 100 has a so-called double-source structure in which two data signal lines are provided for each column of pixels. Specifically, in each column of pixels, the odd-numbered pixels are connected to one of the two source lines via their switching elements and the even-numbered pixels are connected to the other of the two source lines via their switching elements. That is, in the double-source structure, in which one pixel is interposed between two source lines and the two, namely upper and lower, lines are driven by the same gate lines, source signals are simultaneously transmitted via the two lines and the two lines are simultaneously switched so that display data is written.

In the example shown in Fig. 3, as for the pixels 20A1 and 20B1, which are laid side by side in the column-wise direction, the pixel 20A1 is connected to the source line S1 via its switching element 21 and the pixel 20B1 is connected to the source line S2 via its switching element 21.

Further, as for the pixels 20A2 and 20B2, which are laid side by side in the column-wise direction, the pixel 20A2, which is adjacent to the pixel 20A1 in the row-wise direction, is connected to the source line S4 via its switching element 21 and the pixel 20B2, which is adjacent to the pixel 20B1 in the row-wise direction, is connected to the source line S3 via its switching element 21. Note here that the source lines S2 and S3 are adjacent to each other. Further, in the double-source structure, two-line simultaneous selection is performed by which two adjacent gate lines are selected at a time. For example, simultaneous selection of the gate lines G1 and G2 and simultaneous selection of the gate lines G3 and G4 are performed in sequence.

Therefore, the liquid crystal display apparatus 100 is a liquid crystal display apparatus in which display pixels (20A1, 20A2, 20A3, 20A4, ...) are arranged at intersections between a plurality of gate lines (G1, G2, G3, G4, ...) and a plurality of source lines (S1, S2, S3, S4, ...), display pixels (20A1 and 20B1) are interposed between two source lines (S1 and S2), and the two, namely upper and lower, display pixels (20A1 and 20B1) are connected to the different source lines (S1 and S2), respectively, and driven by the same gate lines (G1 and G2).

According to the liquid crystal display apparatus 100 of the double-source structure, for example, in a case where the number of scanning signal lines is 3240 or larger and the width across corners is 60 inches or larger or in a case where the refresh rate is 120 Hz, the double-source structure has a merit of being high in charging rate, while, in such a case, a single-source structure is often insufficient in charging rate even when source two-sided input driving is performed.

However, in a case of displaying a killer pattern, the liquid crystal display apparatus 100 of the double-source structure suffers from the occurrence of vertical shadows (transcriptions), which lowers display quality. The following describes a principle of the occurrence of transcriptions and countermeasures against such transcriptions.

(Principle of Appearance of Transcriptions)

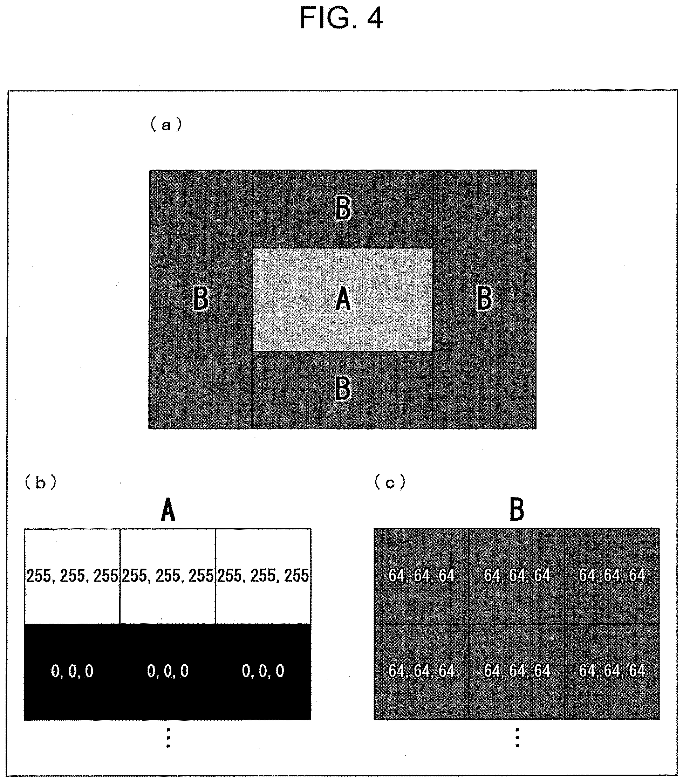

(a) of Fig. 4 shows input image data that the display section 101 of the liquid crystal display apparatus 100 displays. (b) of Fig. 4 shows an area A (killer pattern) of the input image data shown in (a) of Fig. 4. (c) of Fig. 4 shows an area B of the input image data shown in (a) of Fig. 4. Note here that the input image data has 256 levels of gray.

The area A shows a 1-dot horizontal stripe pattern (killer pattern) of (R, G, B) = (255, 255, 255) and (R, G, B) = (0, 0, 0).

Meanwhile, the area B shows a halftone solid pattern of (R, G, B) = (64, 64, 64).

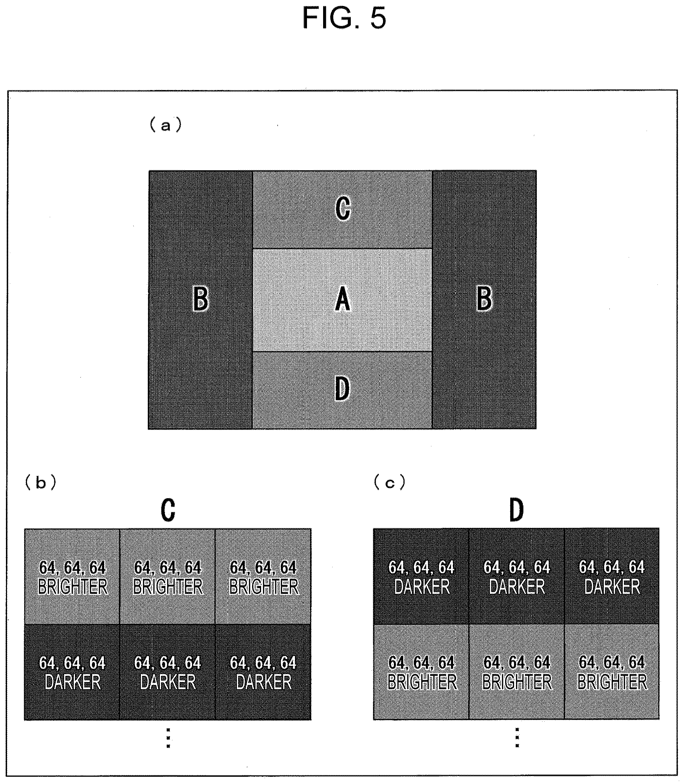

(a) of Fig. 5 shows a display example in which the input image data shown in (a) Fig. 4 is actually displayed. (b) of Fig. 5 shows an area C of the display example of (a) of Fig. 5. (c) of Fig. 5 shows an area D shown in (a) of Fig. 5.

That is, when the display section 101 of the liquid crystal display apparatus 100 displays the input image data shown in (a) of Fig. 4, the areas C and D, which are located above and below the area A (killer pattern), respectively, become brighter than the area B as shown in (a) of Fig. 5.

The area C, which is supposed to be the same halftone solid pattern of (R, G, B) = (64, 64, 64) as the area B, has a dark lower line dark and a bright upper line.

Meanwhile, the area D, which is supposed to be the same halftone solid pattern of (R, G, B) = (64, 64, 64) as the area B, has a dark upper line dark and a bright lower line.

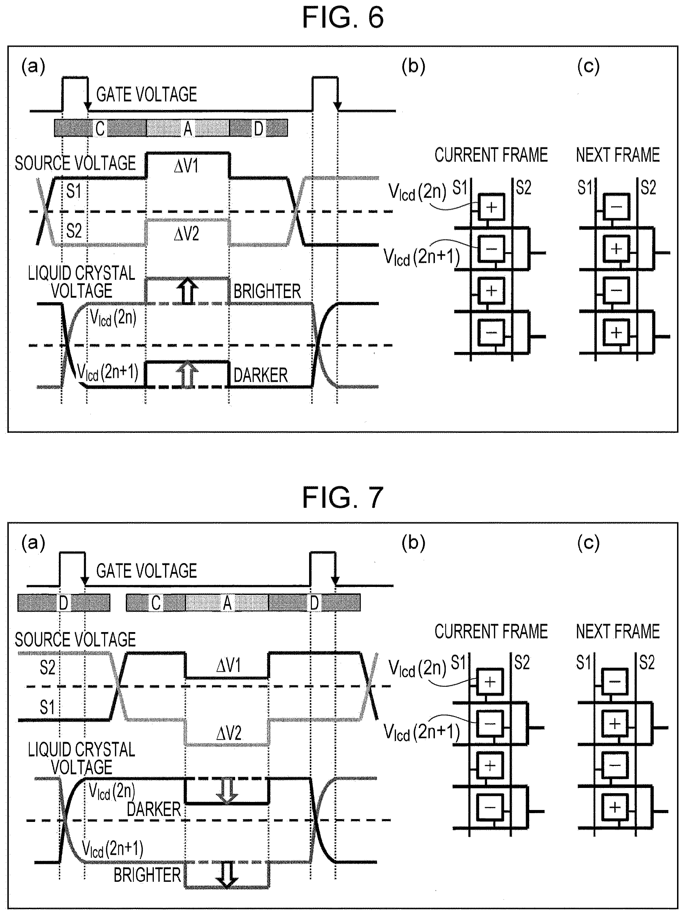

The areas C and D are referred to as "vertical shadows (transcriptions)". A cause of the appearance of transcriptions is explained with reference to Figs. 6 and 7.

(a) of Fig. 6 shows a waveform chart of source voltages and liquid crystal voltages of one frame. (b) of Fig. 6 shows the polarities of voltages that are applied to pixels in the current frame corresponding to the waveform chart shown in (a) of Fig. 6. (c) of Fig. 6 is shows the polarities of voltages that are applied to the pixels in the next frame corresponding to the waveform chart shown in (a) of Fig. 6.

(a) of Fig. 7 shows a waveform chart of source voltages and liquid crystal voltages of a frame that comes after the waveform chart shown in (a) of Fig. 6. (b) of Fig. 7 shows the polarities of voltages that are applied to the pixels in the current frame corresponding to the waveform chart shown in (a) of Fig. 6. (c) of Fig. 7 is shows the polarities of voltages that are applied to the pixels in the next frame corresponding to the waveform chart shown in (a) of Fig. 6.

That is, in the current frame, as shown in (a) of Fig. 6, there are biases in voltage in the area A while the voltages of the source lines S1 and S2 are even during writing of the areas C and D. The fluctuations in voltage cause the voltages that are applied to the liquid crystals to fluctuate through the parasitic capacitances between the source lines S1 and S2 and the pixels. The biases in voltage in a positive direction in (a) of Fig. 6 cause the positive pixels of the area C (i.e. the pixels to which the voltage is applied by the source line S1) to become brighter and cause the negative pixels of the area C (i.e. the pixels to which the voltage is applied by the source line S2) to become darker.

In the next frame, as shown in (a) of Fig. 7, the biases in voltage change into a negative direction as the polarities are reversed in the next frame after writing in the area D. This causes the positive pixels of the area D (i.e. the pixels to which the voltage is applied by the source line S2) to become darker and causes the negative pixels of the area D (i.e. the pixels to which the voltage is applied by the source line S1) to become brighter. The area D is opposite in appearance to the area C.

Thus, in a case of displaying a killer pattern (area A), the liquid crystal display apparatus 100 of the double-source structure suffers from the occurrence of transcriptions (areas C and D) above and below the area A in the column-wise direction.

To address this problem, the present invention reduces the appearance of transcriptions by integrating, for a one-frame period, the values of voltages that are applied onto source lines on both sides of pixels and adjusting an amount of correction according to the resulting integrated values. Specifically, the appearance of transcriptions is reduced by a correction circuit described below.

(Correction Circuit)

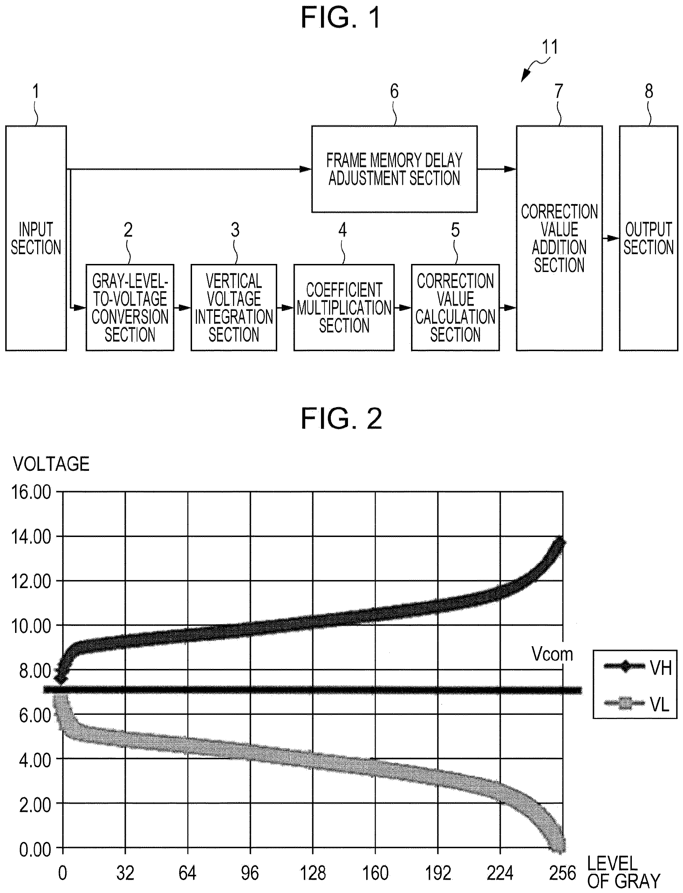

Fig. 1 is a block diagram schematically showing a configuration of a correction circuit 11 according to the present embodiment. It should be noted that the correction circuit 11 is provided in the display control device 105 of the liquid crystal display apparatus 100.

The correction circuit 11 obtains integrated values by integrating, for a one-frame period, each of the values of voltages corresponding to input levels of gray that are applied from the source lines (S1 and S2) to the display pixels (20A1 and 20B1) on the same gate lines (G1 and G2), obtains voltage values by adding the difference between the integrated values to each of the values of the voltages corresponding to the input levels of gray, and uses the voltage values as output levels of gray of the current frame that are given to the two display pixels (20A1 and 20B1).

In the present embodiment, the correction circuit 11 obtains two integrated values by integrating, for a one-frame period, each of the values of voltages corresponding to input levels of gray of the previous frame that are applied from the source lines (S1 and S2) to the display pixels (20A1 and 20B1) on the same gate lines (G1 and G2), obtains voltage values by adding the difference between the integrated values to each of the values of the voltages corresponding to the input levels of gray of the previous frame delayed by a one-frame period, and uses the voltage values as output levels of gray of the current frame that are given to the two display pixels (20A1 and 20B1).

Specifically, the correction circuit 11 is configured in the following manner.

As shown in Fig. 1, the correction circuit 11 includes an input section 1, a gray-level-to-voltage conversion section 2, a vertical voltage integration section (integration section) 3, a coefficient multiplication section (difference operation section) 4, a correction value calculation section (difference operation section) 5, a frame memory delay adjustment section 6, a correction value addition section (addition section) 7, and an output section 8.

The input section 1 receives image data representing an image that is displayed on the liquid crystal display apparatus 100 and outputs the image data to the subsequent gray-level-to-voltage conversion section 2 and the subsequent frame memory delay adjustment section 6.

Upon receiving the image data (input levels of gray) from the input section 1, the gray-level-to-voltage conversion section 2 converts the input levels of gray into voltages and outputs the voltages to the subsequent vertical voltage integration section 3. The gray-level-to-voltage conversion section 2 converts the input levels of gray into voltages with reference to such an LUT (look-up table) as that shown, for example, in Fig. 2. Note here that the LUT shown in Fig. 2 assumes that Vcom serves as a benchmark, that voltages on the VL side are negative, and that voltages on the VH side are positive.

The vertical voltage integration section 3 integrates the values of voltages on the source lines S1 and S2 on the same gate lines for a one-frame period, i.e. a period from a rising edge of a gate signal to a rising edge of the next gate signal, and outputs the integrated values to the subsequent coefficient multiplication section 4. For example, the vertical voltage integration section 3 integrates the source voltages of the source lines S1 and S2 shown in (a) of Fig. 6. Note here that, in the areas C and D, the source voltages come out even and therefore take on 0, but in the area A, the source voltages do not take on 0 because of the biases.

The coefficient multiplication section 4 calculates a voltage fluctuation value (voltage shift amount $\Delta V$ (difference)) between the source lines S1 and S2 by multiplying the integrated values $V_{sou1}$ and $V_{sou2}$ of the source lines S1 and S2 obtained from the vertical voltage integration section 3 by coefficients, respectively, and outputs this voltage shift amount $\Delta V$ to the subsequent correction value calculation section 5. Note here that since the voltage fluctuations occur from the integrated voltage values through the two (source lines S1 and S2) parasitic capacitances ($C_{sou1}$ and $C_{sou2}$), the voltage fluctuation value (voltage shift amount $\Delta V$ (difference)) of the pixels is calculated from the integrated voltage values, the capacitance ($\Sigma C$) of the pixels as a whole, and the parasitic capacitances ($C_{sou1}$ and $C_{sou2}$). Specifically, the voltage shift amount $\Delta V$ is calculated according to Eq. (1) below. Let it be assumed that Coefficient $\alpha = C_{sou1}/\Sigma C$ and Coefficient $\beta = C_{sou2}/\Sigma C$.

$$\Delta V \ = \ \alpha \cdot \Delta V_{sou1} \ - \ \beta \cdot \Delta V_{sou2} \quad \cdots (1)$$

The correction value calculation section 5 calculates a correction value (correction level of gray) from the voltage shift amount $\Delta V$ from the coefficient multiplication section 4 and the levels of gray of the display pixels and outputs the correction level of gray to the subsequent correction value addition section 7. Specifically, the correction value is calculated according to Eq. (2) below. Note here that Din is the input levels of gray, $\Delta V$ is the voltage shift amount, $\Delta D$ is the correction level of gray (correction value), V(Dins) is level of gray => voltage function, invV(Din) is voltage => gray level function.

$$\Delta D \ = \ invV(V(Din) + \Delta V) \quad \cdots (2)$$

It should be noted that since, in actual LSI, an operation in the correction value calculation section 5 is large in circuit size, it is preferable that the operation be simplified using a two-dimensional LUT F (Din, $\Delta V$).

The frame memory delay adjustment section 6 delays, by one frame, the input to the correction value addition section 7 of the image data inputted to the input section 1. This allows the frame to be corrected and the frame from which to calculate the correction value to be identical, and is effective in the case of a moving image or the like where display images change from frame to frame.

The correction value addition section 7 calculates corrected output levels of gray by adding the correction value (correction level of gray) of the correction value calculation section 5 to the levels of gray of the display pixels delayed by one frame by the frame memory delay adjustment section 6 and outputs the corrected output levels of gray to the output section 8. It should be noted that the correction value that is calculated by the correction value calculation section 5 may be either a positive or negative number. For example, in the display image shown in (a) of Fig. 5, the correction value of a pixel that becomes brighter is a negative number and the correction value of a pixel that becomes darker is a positive number.

The output section 8 sends, to the source driver 102, the corrected output levels of gray from the correction value addition section 7.

As can be seen from the above, the correction circuit 11 according to the present embodiment includes: the gray-level-to-voltage conversion section 2, which converts, into voltage values, the input levels of gray of the previous frame that are applied from the source lines to the two, namely upper and lower, display pixels (20A1 and 20B1) on the same gate lines (G1 and G2), respectively; the vertical voltage integration section 3, which integrates, for a one-frame period, each of the two voltage values into which the input levels of gray have been converted by the gray-level-to-voltage conversion section 2; the difference operation section (coefficient multiplication section 4, correction value calculation section 5), which calculates the difference between two integrated values integrated by the vertical voltage integration section 3; the correction value addition section 7, which adds the difference calculated by the difference operation section (coefficient multiplication section 4, correction value calculation section 5) to each of the voltage values corresponding to the input levels of gray of the previous frame stored in a frame memory, and by using, as the output levels of gray of the current frame that are given to the two display pixels (20A1 and 20B1), the voltage values to each of which the difference has been added by the correction value addition section 7, the appearance of transcriptions can be reduced in displaying a killer pattern.

(Transcription Reduction)

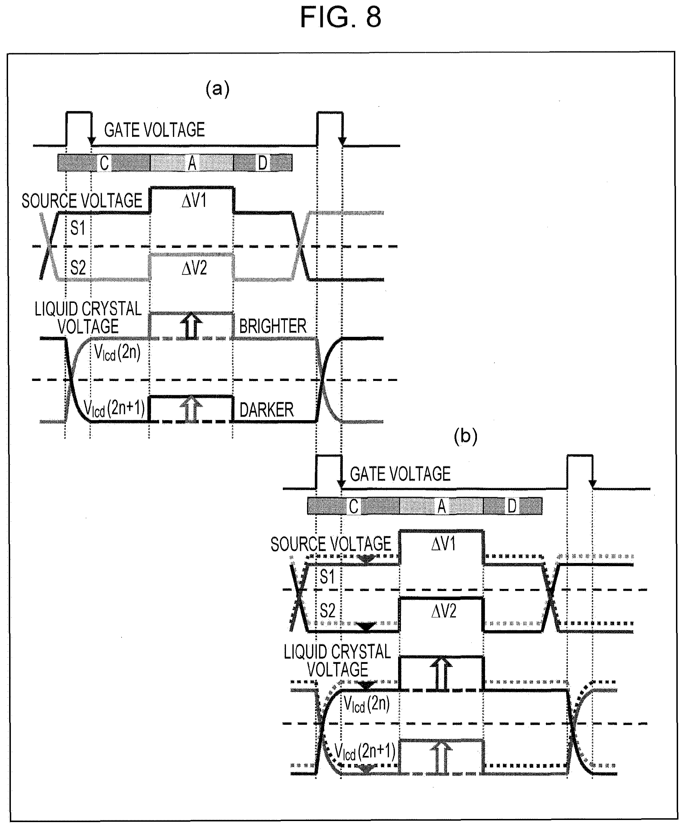

Fig. 8 illustrates waveform charts of uncorrected and corrected source voltages and liquid crystal voltages of the source lines S1 and S2.

The correction circuit 11 obtains integrated values by integrating, for a one-frame period, the uncorrected source voltages of the source lines S1 and S2 shown in (a) of Fig. 8, calculates, from the integrated values, a correction value at which the luminance cancels out the change, determines output levels of gray by adding the correction value to input data delayed by one frame, thereby obtaining the corrected source voltages (indicated by the solid lines in the drawing) of the source lines S1 and S2 shown in (b) of Fig. 8. The dotted line of the waveform chart of (b) of Fig. 8 indicate the uncorrected source voltages and liquid crystal voltages of the source lines S1 and S2.

By displaying an image at the output levels of gray thus corrected by the correction circuit 11, the appearance of transcriptions in the image displayed can be reduced in displaying such a killer pattern as that shown in (a) of Fig. 4. That is, the correction circuit 11 of the display control device 105 according to the present embodiment makes it possible to provide a liquid crystal display apparatus of high display quality that prevents the appearance of transcriptions in displaying a killer pattern such as 1-dot horizontal stripes.

It should be noted that while the present embodiment has been described by taking, as an example, a case where a frame memory (not illustrated) is used so that input data delayed by one frame is corrected with a correction value calculated from the input data, Embodiment 2 is described below by taking, as an example, a case where input data is corrected with a correction value without the use of a frame memory.

[Embodiment 2]

Another embodiment of the present invention is described below. It should be noted that, for convenience of explanation, members having the same functions as those described in the preceding embodiment are given the same reference signs and not described here.

(Correction Circuit)

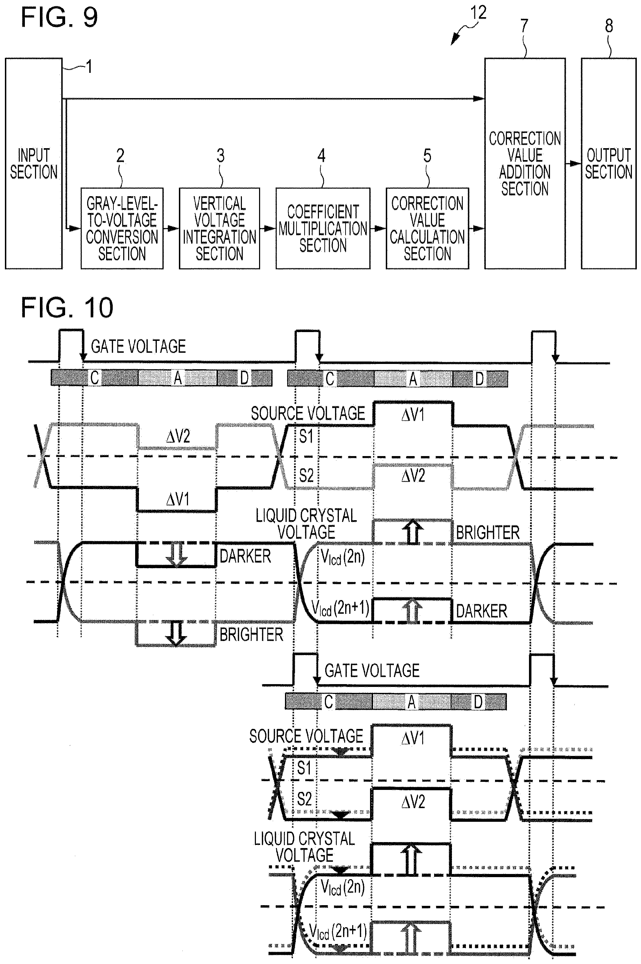

Fig. 9 is a block diagram schematically showing a configuration of a correction circuit 12 according to the present embodiment.

As shown in Fig. 9, the correction circuit 12 includes an input section 1, a gray-level-to-voltage conversion section 2, a vertical voltage integration section 3, a coefficient multiplication section 4, a correction value calculation section 5, a correction value addition section 7, and an output section 8. The correction circuit 12 differs from the correction circuit 11 described in Embodiment 1 only in that the correction circuit 12 does not include a frame memory delay adjustment section 6. In other respects, the correction circuit 12 is the same as the correction circuit 11 described in Embodiment 1.

That is, the correction circuit 12 obtains integrated values by integrating, for a one-frame period, each of the values of voltages corresponding to input levels of gray of the previous frame that are applied from the source lines S1 and S2 to the display pixels (20A1 and 20B1) on the same gate lines (G1 and G2), obtains voltage values by adding the difference between the integrated values to each of the values of the voltages corresponding to the input levels of gray of the current frame, and uses the voltage values as output levels of gray of the current frame that are given to the two display pixels (20A1 and 20B1). The following provides specifics.

The correction circuit 12 includes: the gray-level-to-voltage conversion section 2, which converts, into voltage values, input levels of gray of the previous frame that are applied from the source lines to the two, namely upper and lower, display pixels (20A1 and 20B1) on the same gate lines (G1 and G2), respectively; the vertical voltage integration section 3, which integrates, for a one-frame period, each of the two voltage values into which the input levels of gray have been converted by the gray-level-to-voltage conversion section 2; the coefficient multiplication section 4 and the correction value calculation section 5, which calculate the difference between two integrated values integrated by the vertical voltage integration section 3; the correction value addition section 7, which adds the difference calculated by the coefficient multiplication section 4 and the correction value calculation section 5 to each of the voltage values corresponding to the input levels of gray of the current frame, and by using, as output levels of gray of the current frame that are given to the two display pixels (20A1 and 20B1), the voltage values to each of which the difference has been added by the correction value addition section 7, the appearance of transcriptions can be reduced in displaying a killer pattern.

The present embodiment describes the correction circuit 12 on the assumption that the display image shown in (a) of Fig. 4 is a still image.

(Transcription Reduction (1))

Fig. 10 illustrates waveform charts of uncorrected and corrected source voltages and liquid crystal voltages of the source lines S1 and S2. Note, however, that Fig. 10 differs from Fig. 8 in that the source voltages of the current frame are corrected with a correction value obtained from integrated values obtained by integrating the source voltages of the previous frame for a one-frame period.

That is, in the case of input of a still image pattern of the display image shown in (a) of Fig. 4, the data of the previous frame represents the same image as that of the current frame. Furthermore, in the case of frame reversal of polarity, the integrated values of voltages are opposite in sign but equal in absolute value to each other. Therefore, a correction value is calculated by calculating an amount of correction using the reversed signs of the integrated values of the previous frame.

Therefore, in the correction circuit 12, the correction value calculation section 5 calculates a correction value by thus calculating an amount of correction using the reversed signs of the integrated values of the previous frame, and the correction value addition section 7 obtains output levels of gray by adding the correction value calculated by the correction value calculation section 5 to the display data of the current frame.

Thus, the correction circuit 12 does not require a frame delay and therefore does not need to include a frame memory or a frame memory delay adjustment section 6.

(Transcription Reduction (2))

A killer pattern is described here which makes the correction circuit 12 shown in Fig. 9 unable to perform the corrections properly.

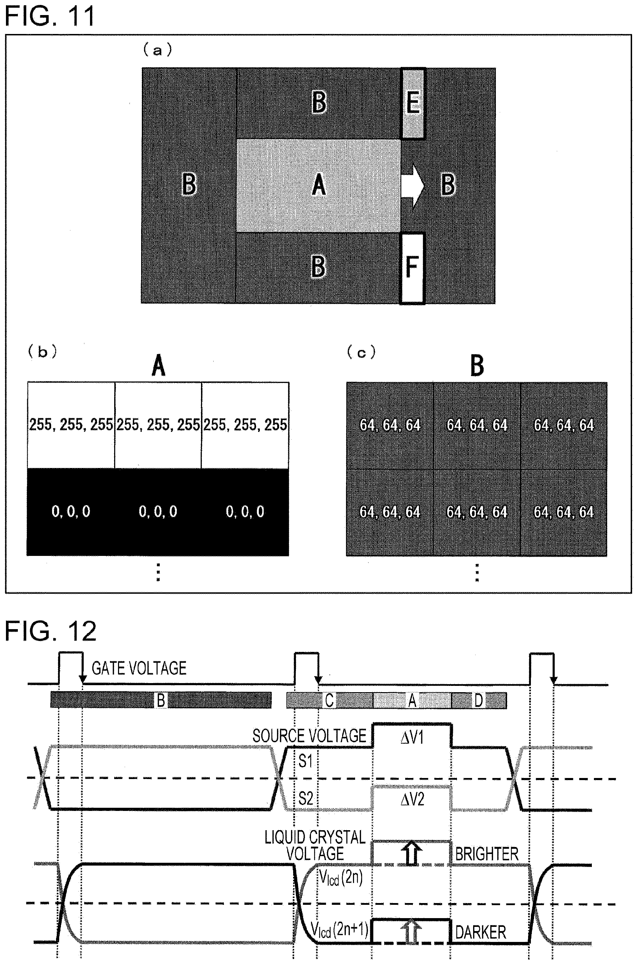

Fig. 11 illustrates diagrams showing a killer pattern. This killer pattern is the same as that shown in (a) of Fig. 4 but differs in that it is horizontally scrolled.

Fig. 12 is a waveform chart of source voltages and liquid crystal voltages of the source lines S1 and S2 in the killer pattern shown in Fig. 11.

Since, as can be seen from the waveform chart shown in Fig. 12, the areas E and F shown in (a) of Fig. 11 are all the area B in the source line direction in the previous frame but becomes the area A in the middle of the current frame, data of the previous frame is different from that of the current frame, with the result that the corrections cannot be performed properly.

Note, however, that since the occurrence of such a killer pattern is limited, it is preferable that the correction circuit 12 be used in preference for a merit of reducing the frame memory.

Thus, in the present embodiment, too, as in Embodiment 1, the correction circuit 12 of the display control device 105 according to the present embodiment makes it possible to provide a liquid crystal display apparatus of high display quality that prevents the appearance of transcriptions in displaying a killer pattern such as 1-dot horizontal stripes.

It should be noted that although each of the preceding embodiments has been described on the assumption that the period for which the values of voltages corresponding to input levels of gray that are applied to source lines (S1 and S2) disposed on both sides of a display pixel (20A1), respectively, are integrated is one frame, this does not imply any limitation and the period of integration needs only be 0.5 frame or longer. That is, the period for which the voltage values are integrated needs only be a period for which the influence on the display pixel can be reduced. It should be noted that if the period of integration is shorter than 0.5 frame, it is impossible to perform the corrections properly with the resulting integrated quantities.

[Conclusions]

A display control device according to Aspect 1 of the present invention is a display control device 105 for controlling display of a liquid crystal display apparatus 100 of a structure in which display pixels (20A1, 20A2, 20A3, 20A4, ...) are arranged at intersections between a plurality of gate lines (G1, G2, G3, G4, ...) and a plurality of source lines (S1, S2, S3, S4, ...) and source lines (S1 and S2) are disposed on both sides of a display pixel (20A1), the display control device 105 including a correction circuit (11, 12) that obtains two integrated values by integrating, for a period of 0.5 frame or longer, values of voltages corresponding to input levels of gray that are applied to the source lines (S1 and S2) disposed on both sides of the display pixel (20A1), respectively, obtains voltage values by adding a difference between the two integrated values to the values of the voltages corresponding to the input levels of gray, and uses the voltage values as output levels of gray of a current frame that are given to the display pixel.

Generally, in a case where source lines are disposed on both sides of a display pixel, the display pixel is influenced by the source lines disposed on both sides thereof. For this reason, as in the case of the foregoing configuration, the difference between the two integrated values obtained by integrating, for a period of 0.5 frame of longer, values of voltages corresponding to input levels of gray that are applied to the source lines (S1 and S2) disposed on both sides of the display pixel (20A1), respectively, serves as a correction value that cancels out the influence (change in luminance) of the source lines on the display pixel. This correction value is added to the values of the voltages corresponding to the input levels of gray, and the resulting voltage values are used as the output levels of gray of the current frame that are given to the display pixel. This reduces the fluctuations in voltage that are applied to the display pixel, thus making the occurrence of a deviation from the desired level of gray difficult.

This makes it possible to improve display quality by reducing the appearance of transcriptions (vertical shadows) due to the influence of the two source lines on the display pixel interposed between the source lines.

A display control device according to Aspect 2 of the present invention is a display control device 105 for controlling display of a liquid crystal display apparatus 100 in which display pixels (20A1, 20A2, 20A3, 20A4, ...) are arranged at intersections between a plurality of gate lines (G1, G2, G3, G4, ...) and a plurality of source lines (S1, S2, S3, S4, ...), display pixels (20A1 and 20B1) are interposed between two source lines (S1 and S2), and the two, namely upper and lower, display pixels (20A1 and 20B1) are connected to the different source lines (S1 and S2), respectively, and driven by the same gate lines (G1 and G2), the display control device including a correction circuit (11, 12) that obtains integrated values by integrating, for a period of 0.5 frame or longer (one-frame period), each of the values of voltages corresponding to input levels of gray that are applied from the source lines (S1 and S2) to the two, namely upper and lower, display pixels (20A1 and 20B1) on the same gate lines (G1 and G2), obtains voltage values by adding a difference between the integrated values to each of the values of the voltages corresponding to the input levels of gray, and uses the voltage values as output levels of gray of a current frame that are given to the two display pixels.

According to the foregoing configuration, the difference between the integrated values obtained by integrating, for a one-frame period, each of the values of voltages corresponding to input levels of gray that are applied to the two display pixels on the same gate lines is equivalent to a voltage variation attributed to the biases in polarity that are applied to the source lines located on both side of the two display pixels. The voltage values obtained by adding this difference to each of the values of the voltages corresponding to the input levels of gray are used as the output levels of gray of the current frame that are given to the two display pixels. This reduces the fluctuations in voltage that are applied to the two display pixels, thus making the occurrence of a deviation from the desired level of gray difficult.

This makes it possible to improve display quality by reducing the appearance of transcriptions (vertical shadows) due to the fluctuations in voltage during so-called double-source driving by which the two, namely upper and lower, display pixels interposed between the two source lines are driven by the same gate lines.

In Aspect 2, a display control device according to Aspect 3 of the present invention may be configured such that when the period of integration of the values of the voltages corresponding to the input levels of gray that are applied to the source lines (S1 and S2) disposed on both sides of the display pixels (20A1 and 20B1) is one frame, the correction circuit (11) obtains integrated values by integrating, for a one-frame period, each of the values of voltages corresponding to input levels of gray of a previous frame that are applied from the source lines (S1 and S2) to the display pixels (20A1 and 20B1) on the same gate lines (G1 and G2), obtains voltage values by adding the difference between the integrated values to each of the values of the voltages corresponding to the input levels of gray of the previous frame delayed by a one-frame period, and uses the voltage values as output levels of gray of the current frame that are given to the two display pixels (20A1 and 20B1).

According to the foregoing configuration, since the output levels of gray of the current frame are ones obtained by adding the fluctuation in voltage due to the input levels of gray of the previous frame (i.e. the difference between the values integrated for a one-frame period) to the input levels of gray of the previous frame, the display image can be corrected properly. In particular, since the corrections can be performed properly in the case of a moving image where images change from frame to frame, the corrections do not invite a decline in display quality.

Note, however, that a frame memory is needed to delay the input levels of gray of the previous frame by a one-frame period. The following shows a specific display control device.

In Aspect 3, a display control device according to Aspect 4 of the present invention is preferably configured such that the correction circuit (11) includes a gray-level-to-voltage conversion section 2 that converts, into voltage values, the levels of gray of the previous frame that are applied from the source lines to the two, namely upper and lower, display pixels (20A1 and 20B1) on the same gate lines (G1 and G2), respectively, an integration section (vertical voltage integration section 3) that integrates, for a one-frame period, each of the two voltage values into which the input levels of gray have been converted by the gray-level-to-voltage conversion section 2, a difference operation section (coefficient multiplication section 4, correction value calculation section 5) that calculates the difference between two integrated values integrated by the integration section (vertical voltage integration section 3), and an addition section (correction value addition section 7) that adds the difference calculated by the difference operation section (coefficient multiplication section 4, correction value calculation section 5) to each of the voltage values corresponding to the input levels of gray of the previous frame stored in a frame memory, and the voltage values to each of which the difference has been added by the addition section (correction value addition section 7) are used as the output levels of gray of the current frame that are given to the two display pixels (20A1 and 20B1).

In Aspect 2, a display control device according to Aspect 5 of the present invention may be configured such that when the period of integration of the values of the voltages corresponding to the input levels of gray that are applied to the source lines (S1 and S2) disposed on both sides of the display pixels (20A1 and 20B1) is one frame, the correction circuit (12) obtains integrated values by integrating, for a one-frame period, each of the values of voltages corresponding to input levels of gray of a previous frame that are applied from the source lines to the display pixels (20A1 and 20B1) on the same gate lines (G1 and G2), obtains voltage values by adding the difference between the integrated values to each of the values of the voltages corresponding to the input levels of gray of the current frame, and uses the voltage values as output levels of gray of the current frame that are given to the two display pixels (20A1 and 20B1).

According to the foregoing configuration, since the output levels of gray of the current frame are ones obtained by adding the fluctuation in voltage due to the input levels of gray of the previous frame (i.e. the difference between the values integrated for a one-frame period) to the input levels of gray of the current frame, there is no need to provide a frame memory for delaying the previous frame by a one-frame period.

In particular, in the case of an image such as a still image that changes little from frame to frame, the display image can be corrected properly by the foregoing configuration.

In Aspect 5, a display control device according to Aspect 6 of the present invention is preferably configured such that the correction circuit (12) includes a gray-level-to-voltage conversion section 2 that converts, into voltage values, the levels of gray of the previous frame that are applied from the source lines to the two, namely upper and lower, display pixels (20A1 and 20B1) on the same gate lines (G1 and G2), respectively, an integration section (vertical voltage integration section 3) that integrates, for a one-frame period, each of the two voltage values into which the input levels of gray have been converted by the gray-level-to-voltage conversion section 2, a difference operation section (coefficient multiplication section 4, correction value calculation section 5) that calculates the difference between two integrated values integrated by the integration section (vertical voltage integration section 3), and an addition section (correction value addition section 7) that adds the difference calculated by the difference operation section (coefficient multiplication section 4, correction value calculation section 5) to each of the voltage values corresponding to the input levels of gray of the current frame, and the voltage values to each of which the difference has been added by the addition section (correction value addition section 7) are used as the output levels of gray of the current frame that are given to the two display pixels (20A1 and 20B1).

A liquid crystal display apparatus according to Aspect 7 of the present invention may include the display control device according to any one of Aspects 1 to 6.

The foregoing configuration makes it possible to improve the display quality of the liquid crystal display apparatus.

A display control device according to each aspect of the present invention may be realized by a computer. In this case, a display control program for a display control device that causes the display control device to be realized by a computer by causing the computer to operate as a correction circuit of the display control device and a computer-readable storage medium storing the display control program are encompassed in the present invention.

The present invention is not limited to the description of the embodiments above, but may be altered within the scope of the claims. An embodiment based on a proper combination of technical means disclosed in different embodiments is encompassed in the technical scope of the present invention. Furthermore, a new technical feature may be formed by combining technical means disclosed in each separate embodiment.

Industrial Applicability

The present invention is suitably applicable to a double-source-drive liquid crystal display apparatus. Reference Signs List

1 Input section
2 Gray-level-to-voltage conversion section
3 Vertical voltage integration section (integration section)
4 Coefficient multiplication section (difference operation section)
5 Correction value calculation section (difference operation section)
6 Frame memory delay adjustment section
7 Correction value addition section (addition section)
8 Output section
11, 12 Correction circuit
20 Pixel (display pixel)
20A1 to 20A4 Pixel (display pixel)
20B1 to 20B4 Pixel (display pixel)
20C1 to 20C4 Pixel (display pixel)
20D1 to 20D4 Pixel (display pixel)

21 Switching element
22 Pixel electrode
23 Pixel capacitor
100 Liquid crystal display apparatus
101 Display section
102 Source driver
103 Gate driver
104 CS driver
105 Display control device
A to F Areas
CS Storage capacitor wire
G1 to G4 Gate line
S1 to S8 Source line

**Claims**

1. A display control device for controlling display of a liquid crystal display apparatus of a structure in which display pixels are arranged at intersections between a plurality of gate lines and a plurality of source lines and source lines are disposed on both sides of a display pixel,
the display control device comprising a correction circuit that obtains two integrated values by integrating, for a period of 0.5 frame or longer, values of voltages corresponding to input levels of gray that are applied to the source lines disposed on both sides of the display pixel, respectively, obtains voltage values by adding a difference between the two integrated values to the values of the voltages corresponding to the input levels of gray, and uses the voltage values as output levels of gray of a current frame that are given to the display pixel.

2. A display control device for controlling display of a liquid crystal display apparatus in which display pixels are arranged at intersections between a plurality of gate lines and a plurality of source lines, display pixels are interposed between two source lines, and the two, namely upper and lower, display pixels are connected to the different source lines, respectively, and driven by the same gate lines,
the display control device comprising a correction circuit that obtains two integrated values by integrating, for a period of 0.5 frame or longer, each of the values of voltages corresponding to input levels of gray that are applied from the source lines to the two, namely upper and lower, display pixels on the same gate lines, respectively, obtains voltage values by adding a difference between the two integrated values to each of the values of the voltages corresponding to the input levels of gray, and uses the voltage values as output levels of gray of a current frame that are given to the two display pixels.

3. The display control device according to claim 2, wherein when the period of integration of the values of the voltages corresponding to the input levels of gray that are applied to the source lines disposed on both sides of the display pixels is one frame, the correction circuit obtains two integrated values by integrating, for a one-frame period, each of the values of voltages corresponding to input levels of gray of a previous frame that are applied from the source lines to the two, namely upper and lower, display pixels on the same gate lines, respectively, obtains voltage values by adding the difference between the two integrated values to each of the values of the voltages corresponding to the input levels of gray of the previous frame delayed by a one-frame period, and uses the voltage values as output levels of gray of the current frame that are given to the two display pixels.

4. The display control device according to claim 3, wherein the correction circuit includes
a gray-level-to-voltage conversion section that converts, into voltage values, the levels of gray of the previous frame that are applied from the source lines to the two, namely upper and lower, display pixels on the same gate lines, respectively,
an integration section that integrates, for a one-frame period, each of the two voltage values into which the input levels of gray have been converted by the gray-level-to-voltage conversion section,
a difference operation section that calculates the difference between two integrated values integrated by the integration section, and
an addition section that adds the difference calculated by the difference operation section to each of the voltage values corresponding to the input levels of gray of the previous frame stored in a frame memory, and
the voltage values to each of which the difference has been added by the addition section are used as the output levels of gray of the current frame that are given to the two display pixels.

**5.** The display control device according to claim 2, wherein when the period of integration of the values of the voltages corresponding to the input levels of gray that are applied to the source lines disposed on both sides of the display pixels is one frame, the correction circuit obtains integrated values by integrating, for a one-frame period, each of the values of voltages corresponding to input levels of gray of a previous frame that are applied to the display pixels on the same gate lines, obtains voltage values by adding the difference between the integrated values to each of the values of the voltages corresponding to the input levels of gray of the current frame, and uses the voltage values as output levels of gray of the current frame that are given to the two display pixels.

**6.** The display control device according to claim 5, wherein the correction circuit includes
a gray-level-to-voltage conversion section that converts, into voltage values, the levels of gray of the previous frame that are applied from the source lines to the two, namely upper and lower, display pixels on the same gate lines, respectively,
an integration section that integrates, for a one-frame period, each of the two voltage values into which the input levels of gray have been converted by the gray-level-to-voltage conversion section,
a difference operation section that calculates the difference between two integrated values integrated by the integration section, and
an addition section that adds the difference calculated by the difference operation section to each of the voltage values corresponding to the input levels of gray of the current frame, and
the voltage values to each of which the difference has been added by the addition section are used as the output levels of gray of the current frame that are given to the two display pixels.

**7.** A liquid crystal display apparatus comprising the display control device according to any one of claims 1 to 6.

**8.** A display control program for causing a computer to function as the display control device according to any one of claims 1 to 6, the display control program causing the computer to function as the correction circuit.

**9.** A computer-readable storage medium storing the display control program according to claim 8.

# FIG. 1

# FIG. 2

# FIG. 3

# FIG. 4

(a)

(b)

A

| 255, 255, 255 | 255, 255, 255 | 255, 255, 255 |
| 0, 0, 0 | 0, 0, 0 | 0, 0, 0 |

(c)

B

| 64, 64, 64 | 64, 64, 64 | 64, 64, 64 |
| 64, 64, 64 | 64, 64, 64 | 64, 64, 64 |

# FIG. 5

（a）

（b）

C

| 64, 64, 64 BRIGHTER | 64, 64, 64 BRIGHTER | 64, 64, 64 BRIGHTER |
|---|---|---|
| 64, 64, 64 DARKER | 64, 64, 64 DARKER | 64, 64, 64 DARKER |

⋮

（c）

D

| 64, 64, 64 DARKER | 64, 64, 64 DARKER | 64, 64, 64 DARKER |
|---|---|---|
| 64, 64, 64 BRIGHTER | 64, 64, 64 BRIGHTER | 64, 64, 64 BRIGHTER |

⋮

# FIG. 6

# FIG. 7

# FIG. 8

(a)

GATE VOLTAGE

C  A  D

SOURCE VOLTAGE  ΔV1

S1

S2  ΔV2

LIQUID CRYSTAL
VOLTAGE  BRIGHTER

$V_{lcd}(2n)$

$V_{lcd}(2n+1)$  DARKER

(b)

GATE VOLTAGE

C  A  D

SOURCE VOLTAGE  ΔV1

S1

S2  ΔV2

LIQUID CRYSTAL
VOLTAGE

$V_{lcd}(2n)$

$V_{lcd}(2n+1)$

FIG. 9

FIG. 10

# FIG. 11

(a)

(b)

**A**

| 255, 255, 255 | 255, 255, 255 | 255, 255, 255 |
|:---:|:---:|:---:|
| 0, 0, 0 | 0, 0, 0 | 0, 0, 0 |

⋮

(c)

**B**

| 64, 64, 64 | 64, 64, 64 | 64, 64, 64 |
|:---:|:---:|:---:|
| 64, 64, 64 | 64, 64, 64 | 64, 64, 64 |

⋮

# FIG. 12

# FIG. 13

(a)
INPUT IMAGE

(b)
DISPLAY IMAGE

# FIG. 14

# FIG. 15

**EP 3 288 019 A1**

# INTERNATIONAL SEARCH REPORT

International application No.

PCT/JP2016/062023

**A. CLASSIFICATION OF SUBJECT MATTER**
*G09G3/36*(2006.01)i, *G02F1/133*(2006.01)i, *G09G3/20*(2006.01)i

According to International Patent Classification (IPC) or to both national classification and IPC

**B. FIELDS SEARCHED**

Minimum documentation searched (classification system followed by classification symbols)
G09G3/36, G02F1/133, G09G3/20

Documentation searched other than minimum documentation to the extent that such documents are included in the fields searched
Jitsuyo Shinan Koho          1922–1996     Jitsuyo Shinan Toroku Koho     1996–2016
Kokai Jitsuyo Shinan Koho    1971–2016     Toroku Jitsuyo Shinan Koho     1994–2016

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2014-178362 A   (Seiko Epson Corp.),<br>25 September 2014 (25.09.2014),<br>paragraphs [0025] to [0027], [0039], [0045] to<br>[0063]; fig. 4 to 5, 8<br>& US 2014/0267452 A1<br>paragraphs [0054] to [0061], [0090], [0106] to<br>[0145]; fig. 4 to 5, 8 | 1,7-9<br>2,5-6<br>3-4 |
| Y<br>A | WO 2012/111553 A1   (Sharp Corp.),<br>23 August 2012 (23.08.2012),<br>paragraph [0040]; fig. 2<br>& US 2013/0321384 A1<br>paragraph [0053]; fig. 2 | 2,5-6<br>3-4 |

☒   Further documents are listed in the continuation of Box C.      ☐   See patent family annex.

| | |
|---|---|
| *        Special categories of cited documents:<br>"A"    document defining the general state of the art which is not considered    to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| 04 July 2016 (04.07.16) | 12 July 2016 (12.07.16) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
|---|---|

Form PCT/ISA/210 (second sheet) (January 2015)

**INTERNATIONAL SEARCH REPORT**

International application No.

PCT/JP2016/062023

C (Continuation).    DOCUMENTS CONSIDERED TO BE RELEVANT

| Category* | Citation of document, with indication, where appropriate, of the relevant passages | Relevant to claim No. |
|---|---|---|
| A | WO 2010/079641 A1  (Sharp Corp.), 15 July 2010 (15.07.2010), entire text; all drawings & US 2011/0242148 A1 entire text; all drawings | 1-9 |
| A | JP 2013-134400 A  (Seiko Epson Corp.), 08 July 2013 (08.07.2013), entire text; all drawings & US 2013/0162698 A1 entire text; all drawings | 1-9 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2010108314 A